# EUROPEAN PATENT APPLICATION

(11) **EP 4 538 809 A1**
(43) Date of publication of application: **16.04.2025**
(21) Application number: 23819013.6
(22) Date of filing: 01.06.2023
(51) Int. Cl.: G05B 15/02, G05B 19/418

(54) **DEVICE CONTROL METHOD, APPARATUS AND SYSTEM, AND ELECTRONIC DEVICE AND READABLE STORAGE MEDIUM**

(30) Priority: 08.06.2022 CN 202210647674
(71) Applicant: Lumi United Technology Co., Ltd., Shenzhen, Guangdong 518000 (CN)
(72) Inventor: YANG, Jiabo, Shenzhen, Guangdong 518000 (CN)
(74) Representative: Zaboliene, Reda
(86) International application number: PCT/CN2023/097864
(87) International publication number: WO 2023/236848

(57) **Abstract**

A device control method, comprising : acquiring a control instruction for a device in a target space, and detecting the current position of a target object in the target space (S110); when there are a plurality of devices corresponding to the control instruction in the target space, determining, on the basis of the current position of the target object and the positions of the devices, a target device satisfying a control condition from among the plurality of devices (S120); and controlling the target device to execute the control instruction (S130).

## Description

The present disclosure claims priority of Chinese patent application No. CN2022106476745 with an invention title "DEVICE CONTROL METHOD, APPARATUS AND ELECTRONIC DEVICE AND READABLE STORAGE MEDIUM" filed on June 8, 2022, the entire content of which is incorporated herein by reference.

### TECHNICAL FIELD

The present disclosure relates to the technical field of control technology, and in particular, the present disclosure relates to a device control method, apparatus and electronic device, and readable storage medium.

### BACKGROUND

At present, with the development of electronic information technology, an increasing number of smart electronic devices are being applied in various places. Generally, users can designate a specific smart electronic device and send control instructions to control the smart electronic device to perform corresponding actions. However, this traditional control method requires users to actively control and operate the designated devices, which is cumbersome and not intelligent enough. receives the control instructions sent by the electronic device and executes the control instructions

### SUMMARY OF THE DISCLOSURE

According to one aspect of the embodiments of the present disclosure, a device control method includes: obtaining a control instruction for devices in a target space, detecting a current position of a target object in the target space; when there are multiple devices corresponding to the control instruction in the target space, determining a target device that meets a control condition from the multiple devices, based on the current position of the target object and positions of the multiple devices; and controlling the target device to execute the control instruction.

According to one aspect of the embodiments of the present disclosure, a device control method, executed by a device control system, wherein the device control system includes an electronic device and a smart device, the method includes: the electronic device obtaining control instruction for devices in a target space, detect a current position of a target object in the target space, and determining devices that meet control condition from multiple devices when there are the multiple devices corresponding to the control instruction in the target space, based on the current position of the target object and the positions of the multiple devices; the smart device receiving the control instruction sent by the electronic device and executing the control instruction.

According to one aspect of the embodiments of the present disclosure, a device control apparatus, comprising: a detector, configured to obtain a control instruction for devices in a target space and detect a current position of a target object in the target space; a processor, configured to determine a target device that meets a control condition from multiple devices when there are the multiple devices corresponding to the control instruction in the target space, based on the current position of the target object and positions of the multiple devices; a controller, configured to control the target device to execute the control instruction.

According to one aspect of the embodiments of the present disclosure, a device control system, wherein the system includes: an electronic device, configured to obtain control instruction for devices in a target space, detect a current position of a target object in the target space, and determine devices that meet control condition from multiple devices when there are the multiple devices corresponding to the control instruction in the target space, based on the current position of the target object and the positions of the multiple devices; a smart device, configured to receive the control instruction sent by the electronic device and execute the control instruction.

According to one aspect of the embodiments of the present disclosure, an electronic device, including a memory and a processor, the memory storing computer-readable instructions, the processor performs the steps of the method as described in the first aspect when executing the computer-readable instructions.

According to one aspect of the embodiments of the present disclosure, a computer readable storage medium, the computer readable storage medium storing processor-executable computer-readable instructions, the processor executing the method described above when the processor executes the computer-readable instructions.

According to one aspect of the embodiments of the present disclosure, a computer program product or computer program, the computer program product or computer program comprising computer-readable instructions, the computer-readable instructions stored on a computer readable storage medium; a processor of a computer device reads the computer-readable instructions from the computer readable storage medium, and the processor implements the steps of the device control method of the present disclosure when executing the computer-readable instructions.

Other features and advantages of the embodiments of the present disclosure will be described in the following description, and, in part, will become apparent from the description, or will be understood by implementing the embodiments of the present disclosure. The purposes and other advantages of the embodiments of the present disclosure can be achieved and obtained through the structures specifically pointed out in the written description, the claims, and the drawings.

### BRIEF DESCRIPTION OF THE DRAWINGS

To more clearly illustrate the technical solutions in the embodiments of the present disclosure, a brief introduction to the drawings required in the following description of the embodiments will be provided. It is evident that the drawings described below are merely some embodiments of the present disclosure, and for those skilled in the art, other drawings can be obtained based on these drawings without the need for creative labor.
FIG. 1 illustrates a schematic diagram of the implementation environment involved in the present disclosure.
FIG. 2 illustrates an application scenario diagram of a device control method provided in an embodiment of the present disclosure.
FIG. 3 illustrates another application scenario diagram of a device control method provided in an embodiment of the present disclosure.
FIG. 4 illustrates a method flow diagram of a device control method provided in an embodiment of the present disclosure.
FIG. 5 illustrates a method flow diagram of a device control method provided in another embodiment of the present disclosure.
FIG. 6 illustrates an implementation diagram of step S210 in FIG. 5.
FIG. 7 illustrates an implementation diagram of obtaining a calibration image provided in an embodiment of the present disclosure.
FIG. 8 illustrates a schematic diagram of a specified part of a target object provided in an embodiment of the present disclosure.
FIG. 9 illustrates a method flow diagram of a device control method provided in another embodiment of the present disclosure.
FIG. 10 illustrates a method flow diagram of a device control method provided in yet another embodiment of the present disclosure.
FIG. 11 illustrates another scenario diagram of a device control method provided in an embodiment of the present disclosure.
FIG. 12 illustrates a structural block diagram of the device control apparatus provided in an embodiment of the present disclosure.
FIG. 13 illustrates a structural block diagram of an electronic device provided in an embodiment of the present disclosure.
FIG. 14 illustrates a structural block diagram of a computer readable storage medium provided in an embodiment of the present disclosure.
FIG. 15 illustrates a structural block diagram of a computer program product provided in an embodiment of the present disclosure.

### DETAILED DESCRIPTION

To enable those skilled in the art to better understand the technical solutions of the present disclosure, the following will combine the drawings in the embodiments of the present disclosure to provide a clear and complete description of the technical solutions in the embodiments of the present disclosure. Obviously, the described embodiments are only part of the embodiments of the present disclosure, not all embodiments. The components of the embodiments of the present disclosure described and shown in the drawings can be arranged and designed in various configurations. Therefore, the detailed description of the embodiments of the present disclosure provided in the drawings is not intended to limit the scope of the present disclosure, but only to represent selected embodiments of the present disclosure. All other embodiments obtained by those skilled in the art without creative labor belong to the scope of protection of the present disclosure.

It should be noted that similar reference numbers and letters in the following drawings represent similar items. Therefore, once an item is defined in a drawing, it does not need to be further defined and explained in subsequent drawings. At the same time, in the description of the present disclosure, terms such as "first" and "second" are used only for descriptive purposes and should not be understood as indicating or implying relative importance.

Currently, with the development of electronic information technology, more and more smart electronic devices are being applied in various places. Generally, users can specify a certain smart electronic device and send control instructions to control the smart electronic device to perform corresponding actions. However, this traditional control method requires users to actively control and operate the specified devices, which is cumbersome and not intelligent enough. How to control the specified devices more intelligently and improve the user experience has become an urgent problem to be solved.

In existing technologies, smart devices can generally be equipped with sensor systems and can trigger the smart devices to perform corresponding actions based on the sensor systems. For example, a smart device can be equipped with an infrared sensor, and when the infrared sensor detects movement of an object in a specified area, it can control the smart device to perform corresponding actions, such as turning on. Smart devices can also be equipped with remote control interaction systems, which enable smart devices to communicate with the user's electronic devices, so that users can control smart devices through electronic devices, such as controlling smart devices to turn on, etc.

However, the inventors found in their research that in the methods of controlling smart devices based on sensor systems, multiple devices may be triggered at the same time, which may not meet the user's actual expectations; in the methods of controlling smart devices based on remote control interaction systems, the operation is cumbersome and not intelligent enough.

Therefore, to overcome the above shortcomings, the present disclosure provides a device control method, apparatus, electronic device, and readable storage medium. The beneficial effects of the technical solutions provided by the present disclosure are: the device control method, apparatus, electronic device, and readable storage medium provided by the present disclosure can determine the target device that meets the control condition from multiple devices corresponding to the control instruction in the target space, and then control the target device to execute the control instruction, which can avoid the need for users to actively control the target device, optimizing the user's operation process. The present disclosure determines the target device that meets the control condition from the multiple devices based on the current position of the target object and the positions of the multiple devices, achieving more intelligent device control and improving the user experience.

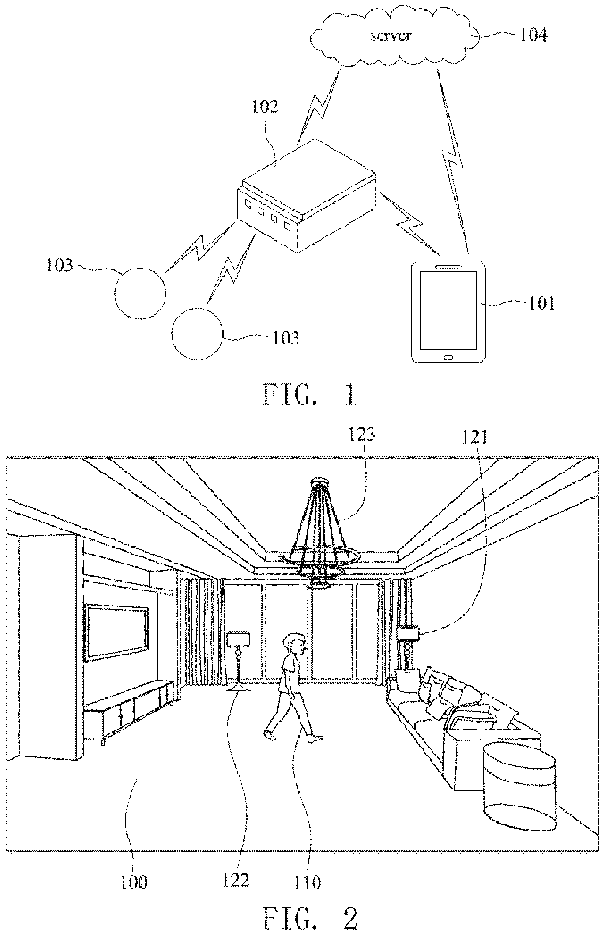

See FIG. 1, which is a schematic diagram of the implementation environment involved in the present disclosure. The implementation environment includes a terminal 101, a network equipment 102, smart devices 103, and a server 104.

The terminal 101 can communicate with the server 104 through a network. Specifically, the terminal 101 can communicate with the server 104 through a cellular network, for example, the terminal 101 can communicate with the server 104 through Long Term Evolution (LTE); the terminal 101 can also communicate with the server 104 through New Radio (NR). The terminal 101 can also communicate with the server 104 through Wi-Fi wireless communication technology.

The terminal 101 can be a desktop computer, a laptop computer, a tablet computer, a smart phone, a smart speaker, a smart control panel, or other electronic devices that can implement network connections, which is not limited here. The server 104, which can also be considered as the cloud, can be implemented by a single server or a server cluster composed of multiple servers.

Optionally, the network equipment 102 can communicate with the server 104. Specifically, the network equipment 102 can communicate with the server 104 through fiber optics, network cables, etc. The network equipment 102 can include gateways, routers, etc. In some implementations, the gateway can be an intelligent gateway with control capabilities, and can directly control each smart device 103 through the intelligent gateway.

The smart device 103 can communicate with the network equipment 102. Specifically, the smart device 103 can communicate with the network equipment 102 through wireless connections. For example, the smart device 103 can be equipped with Wi-Fi wireless communication technology, and the smart device 103 can communicate with the network equipment 102 through Wi-Fi; the smart device 103 can also be equipped with Zigbee, and the smart device 103 can communicate with the network equipment 102 through Zigbee, the smart device 103 can also be equipped with Bluetooth, and the smart device 103 can communicate with the network equipment 102 through Bluetooth. The smart device 103 can include smart lights, smart air conditioners, smart curtains, smart control panels, etc.

Optionally, the terminal 101 can communicate with the smart device 103 through the network equipment 102 to achieve control over the smart device 103; the terminal 101 can also connect to the server 104, and the server 104 can communicate with the network equipment 102, and the smart device 103 can communicate with the network equipment 102, so that the terminal 101 can communicate with the smart device 103 through the server 104 and the network equipment 102, thereby controlling the smart device 103.

Specifically, see FIG. 2, which shows an application scenario diagram of the device control method provided in an embodiment of the present disclosure, i.e., the device control scenario 100, wherein the target object 110 is located in the device control scenario 100, and the device control scenario 100 also includes a light 121, a light 122, and a light 123. Based on the current position of the target object 110, as well as the positions of the light 121, the light 122, and the light 123, the target light that meets the control condition can be determined, and then the target light can be controlled. For example, when light 121 is determined to be the target light, it can be controlled, such as controlling the light 121 to turn on, flash, or turn off. The target object can be a user.

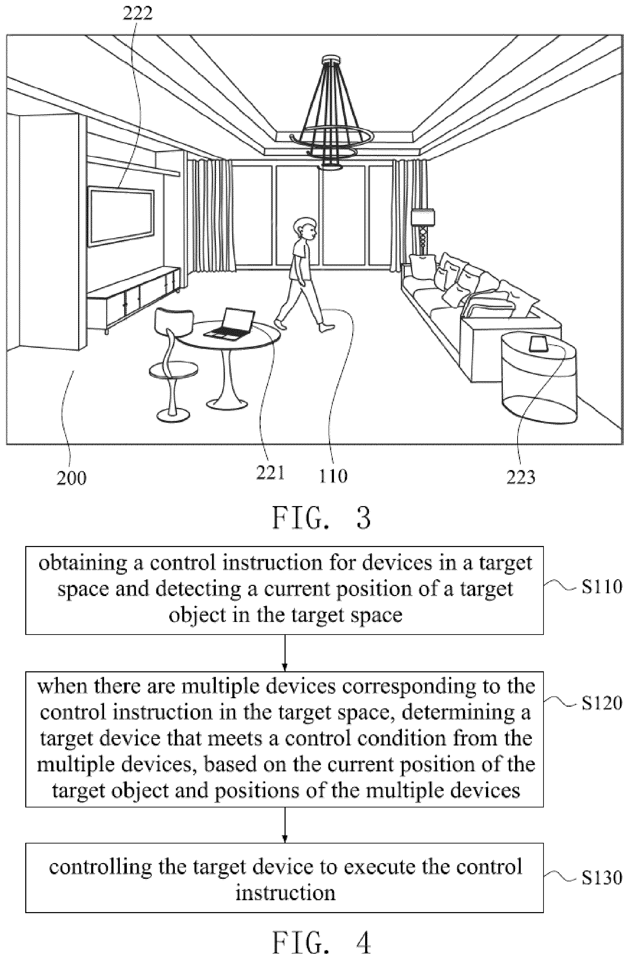

See FIG. 3, which shows another application scenario diagram of the device control method provided in an embodiment of the present disclosure, i.e., the device control scenario 200, where the target object 110 is located in the device control scenario 200, and the device control scenario 200 also includes a video device 221, a video device 222, and a video device 223. Based on the current position of the target object 110, as well as the positions of the video device 221, the video device 222, and the video device 223, the target video device that meets the control condition can be determined, and then the target video device can be controlled. For example, when the video device 221 is determined to be the target video device, it can be controlled, such as controlling video device 221 to turn on or off.

The method of determining the target light that meets the control condition in the device control scenario 100 shown in FIG. 2, and the method of determining the target video device that meets the control condition in the device control scenario 200 shown in FIG. 3, can refer to the subsequent implementation modes.

Please refer to FIG. 4, which illustrates a device control method provided in an embodiment of the present disclosure that can be applied to electronic devices with control capabilities. This method can be applied to the device control scenario 100 or device control scenario 200 described in the previous embodiments. Specifically, the method is described by taking its application to an electronic device as an example, which can specifically be the terminal, network device, and server, etc., shown in FIG. 1. The method includes the following steps:

Step S110: obtaining a control instruction for devices in a target space and detecting a current position of a target object in the target space.

For some implementations, the control instruction can be configured to control the corresponding device to perform corresponding operation. The corresponding device can be a controllable device in the target space, such as the light 121, the light 122, or the light 123 shown in the device control scenario 100 in FIG. 2; it can also be the video device 221, the video device 222, or the video device 223 shown in the device control scenario 200 in FIG. 3. For example, the control instruction can be configured to indicate that the corresponding device should be turned on or off, and the control instruction can also be configured to instruct the corresponding device to make adjustment; the present disclosure is not limited to this.

Optionally, the control instruction can be actively triggered by the target object. For example, when the control instruction is configured to indicate turning on a light, the target object can actively issue a control instruction to indicate that the light should be turned on. Specifically, the target object can trigger the control instruction through an electronic device, such as an input module of the terminal. The electronic device has previously established a connection with the corresponding device to be controlled, for example, the terminal can access the internet through wireless communication technology Wi-Fi, and the corresponding device to be controlled can access the internet through wireless communication technology Wi-Fi or Zigbee network, etc., thus achieving the connection between the terminal and the corresponding device. For example, the target object can issue a control instruction through a corresponding application running on the terminal, such as clicking on the icon corresponding to the control instruction in the application to issue the control instruction, or by entering code configured to issue the control instruction.

Optionally, the target object can also issue a control instruction through voice, where the electronic device can capture the voice of the target object and convert it into the corresponding control instruction, thus achieving control through voice commands. For example, the target object says "turn on the TV," the electronic device can receive the voice of the target object and convert it into the control instruction "turn on the TV," i.e., the target object successfully issues the control instruction.

The target object can refer to a person or thing that meets specific requirements. In the implementation provided by the present disclosure, the target object can be a user, specifically, a user in the target space. Optionally, the target object can also be a user whose identity information meets a specified condition.

Optionally, the control instruction can also be a pre-configured automatic instruction, which can be one or more. Each automatic instruction can correspond to a trigger condition, and when the trigger condition is met, the corresponding control instruction can be automatically triggered. For example, the automatic instruction can include "turn on the light" or "use the TV for a call." The trigger condition for "turn on the light" can be that the distance between the target object and the light is less than a preset distance. The trigger condition for "use the TV for a call" can be that the terminal, which has previously established a connection with the corresponding device, is in a call state, wherein the terminal can be a smartphone, tablet, laptop, etc., and the corresponding device can be a TV or audio equipment with a microphone and speaker. When the distance between the target object and the light is less than the preset distance, the electronic device can trigger the control instruction "turn on the light"; when the terminal is in a call state, the electronic device can trigger "use the TV or audio equipment for a call."

Optionally, based on the pre-configured automatic instruction, the electronic device can further generate personalized control instructions based on different target objects. For example, the target object can be distinguished by identity information, i.e., different control instructions can be generated for target objects with different identity information.

For example, when the automated instruction can include "turn on the light," where the trigger condition for "turn on the light" can be detecting that the distance between the target object and the light is less than a preset distance, and the control instruction corresponding to target object A can be "turn on the light in manner A," then when the distance between target object A and the light is less than the preset distance, "turn on the light in manner A" can be triggered. In which, manner A can be to control the light to turn on and flash at frequency A1, or control the light to turn on and display color A2.

It should be noted that the control instructions corresponding to the aforementioned target object are merely an example and do not limit the present disclosure; they can be flexibly set according to needs in actual applications.

The target space can refer to a real spatial environment, which can specifically be a defined spatial range, such as the space where the target object is located, like a specified venue space, a user's home space, etc. For the embodiments provided by the present disclosure, the target space can be a spatial range determined based on the target object.

For example, the target space can be a range space centered on the target object, which can be circular, rectangular, etc., without limitation.

For example, the target space can be a circular range space with a radius of 3m centered on the target object, the target space can also be a rectangular range space that is 5m long and 3m wide centered on the target object. The target space can also be the room where the target object is located.

For example, when the target object is in the living room, the target space can include the living room. Another example is that the target space can be the entire house where the target object is located. For example, when the entire house includes a living room, study, bedroom, and kitchen, the target space can be the entire house where the target object is located, including the living room, study, bedroom, and kitchen.

The target object can be a human body, i.e., a user. In some embodiments, the target object can also be a specified user, such as a designated user who has been pre-authorized on the terminal.

Optionally, an image capture device can be set in the target space to capture spatial images corresponding to the target space, and then the electronic device can determine the current position of the target object based on the spatial images. The specific method for obtaining the current position can be referred to in the subsequent embodiments.

Step S120: when there are multiple devices corresponding to the control instruction in the target space, determining a target device that meets a control condition from the multiple devices, based on the current position of the target object and positions of the multiple devices.

It is easy to understand that in the target space, there can be different types of devices, such as display-type devices, lighting-type devices, temperature control-type devices, etc., and each type of device can include multiple quantities, for example, there can be multiple lighting-type devices in the target space, such as ceiling lights, table lamps, and floor lamps. Therefore, the devices corresponding to the control instruction can also be multiple, for example, when the control instruction is "turn on the light," the corresponding devices for the control instruction are lights, and the ceiling lights, table lamps, and floor lamps included in the target space are all devices corresponding to the control instruction, i.e., there are multiple devices corresponding to the control instruction in the target space. It can be understood that the devices corresponding to the control instruction can be the controllable devices of the electronic device, i.e., the controllable devices that can be controlled by the electronic device.

Optionally, as can be seen from the aforementioned steps, the electronic device can determine the current position of the target object based on the spatial images of the target space captured by the image capture device. Optionally, at this time, the spatial images corresponding to the target space also include multiple devices corresponding to the control instruction, so the electronic device can also determine the positions of the multiple devices based on the spatial images.

It is easy to understand that since devices are generally set in a certain position and not easily moved, the position of the device generally does not change. Therefore, the electronic device can pre-capture the spatial image of the target space through the image capture device to determine the positions of the devices that can be controlled by the control instruction. Subsequently, it can directly use the positions of each device without needing to recapture the spatial image of the target space through the image capture device each time to retrieve the device's position, saving computational resources and optimizing overall efficiency.

Optionally, the electronic device can determine the target device that meets the control condition from multiple devices based on the current position of the target object and the positions of the multiple devices.

For some implementations, a general target object will pay more attention to devices that is closer to the target object than that is farther away. Therefore, the control condition can be set based on the current position of the target object and the position of the multiple devices.

For example, the control condition can be the device closest to the current position of the target object. In this case, the electronic device can consider the device that is closest to the current position of the target object as the target device. The specific determination method can be referred to in the subsequent implementations.

Step S130: controlling the target device to execute the control instruction.

For some implementations, after determining the target device corresponding to the control instruction based on the aforementioned steps, the electronic device can control the target device to execute the control instruction. For example, if the control instruction is "turn on the light," and the target device determined based on this instruction is a desk lamp, then the desk lamp can be controlled to turn on.

Optionally, to prevent other users besides the target object from casually issuing control instructions to control the corresponding devices, which could cause security risks, the electronic device can also detect the identity information of the target object after determining the target device corresponding to the control instruction, and only control the target device to execute the control instruction when the identity information meets a specified condition. The detailed method for determining whether the identity information meets the specified condition can be referred to in the subsequent implementations.

The device control method provided by the present disclosure allows the electronic device to determine the target device that meets the control condition from the multiple devices corresponding to the control instruction in the target space, and then control the target device to execute the control instruction, without the need for the user to actively control the target device, optimizing the user's operation process. The present disclosure determines the target device that meets the control condition from the multiple devices based on the current position of the target object and the positions of the multiple devices, achieving more intelligent device control and improving the user experience.

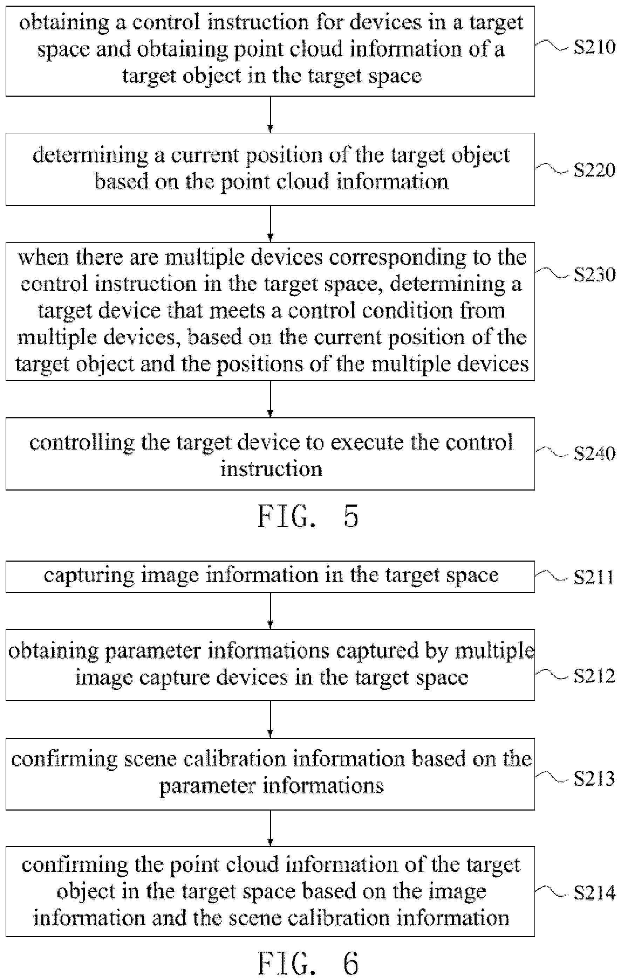

Please refer to FIG.5, which illustrates a device control method provided in an embodiment of the present disclosure. This method can be applied to the device control scenario 100 or device control scenario 200 described in the previous embodiments. Specifically, the method includes steps S210 to S240.

Step S210: obtaining a control instruction for devices in a target space and obtaining point cloud information of a target object in the target space.

For some implementations, to obtain the current position of the target object in the target space, an image capture device can be set up in the target space. The image capture device can be configured to collect spatial images corresponding to the target space, and then the electronic device can determine the current position of the target object based on the spatial image. Specifically, the image capture device can include a camera with depth information, such as a depth camera, a structured light camera, a 3D depth camera, or a stereoscopic cameras, etc. The image capture device should be positioned in a position that allows the camera to cover the target space.

It is easy to understand that due to the influence of the camera's field angel of view (Field angel of view, FOV) and the image accuracy issues when capturing image from areas far from the image capture device, it is possible to use more than one image capture device in the target space. For example, multiple cameras can be set up in the target space to achieve better coverage and obtain a higher precision image.

Optionally, setting up multiple image capture devices can also avoid blind spots caused by occlusions of the target object. It should be noted that the present disclosure does not limit the number or setup method of the image capture devices, which can be flexibly set according to needs.

Specifically, please refer to FIG. 6, which shows an implementation diagram of step S210, including steps S211 to S214.

Step S211: capturing image information in the target space.

Step S212: obtaining parameter informations captured by multiple image capture devices in the target space.

Step S213: confirming scene calibration information based on the parameter informations.

For some implementations, the electronic device can obtain the collected image information in the target space. For example, image information of the target space can be collected through the image capture device, which can be in the form of a photograph. If there is only one image capture device, the image captured by this device is the image information of the target space. If there are multiple image capture devices, each device will capture different images, so it is necessary to calibrate the multiple image capture devices. Then, based on the calibrated devices, process the images captured by each device to confirm the image information corresponding to the target space. The calibration of multiple image capture devices can be done through the parameter information of each device.

Specifically, the electronic device can obtain parameter information collected by multiple image capture devices under in target space for a pre-acquired calibration board, which can be a flat panel with a fixed pattern array that has been prepared in advance. The parameter information is the image that includes the calibration board, captured by the image capture device. Optionally, the parameter information collected by each image capture device can be multiple, meaning that after the electronic device has collected the parameter information of the calibration board with the image capture device, the calibration board can be adjusted in angle and then the image capture device can re-collect the parameter information of the calibration board. Subsequently, based on a calibration algorithm, the scene calibration information can be confirmed.

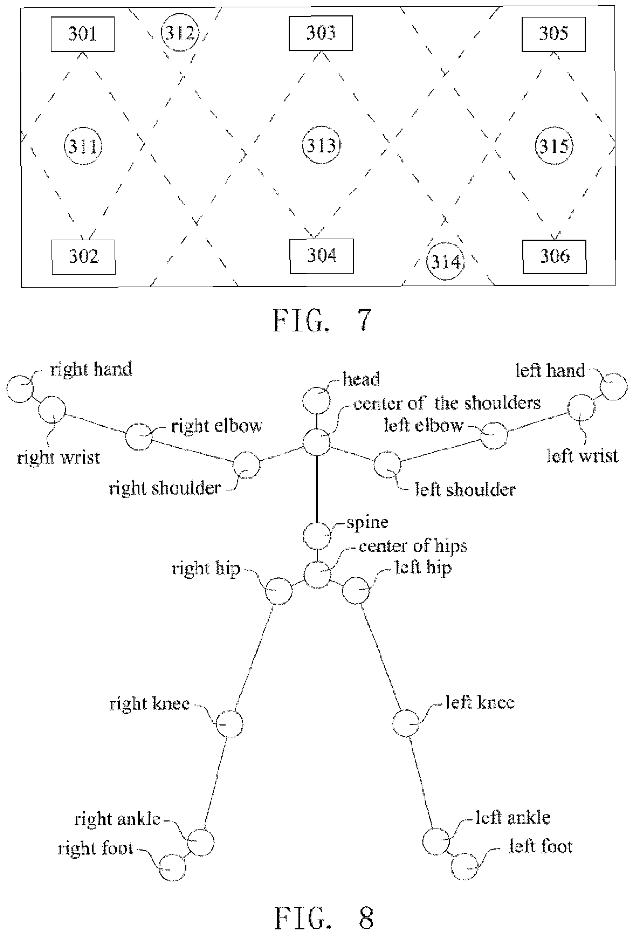

Please refer to FIG.7, which illustrates an implementation diagram for obtaining parameter information. The multiple image capture devices can be pre-numbered, as shown in FIG.7, including an image capture device 301, an image capture device 302, up to an image capture device 306. Optionally, FIG. 7 also includes a calibration board 311, a calibration board 312, up to a calibration board 315. The image capture devices can capture images of the calibration boards to obtain the spacing of the pattern arrays on the captured calibration boards, and then combine this with a pre-set fixed spacing. The pre-set fixed distance can serve as a reference distance, allowing for the correction of images obtained by the image capture devices, thereby increasing the accuracy of the acquired images. The dashed lines in FIG.7 represent the field of view FOA (Field of View, FOV) of each image capture device.

Optionally, the calibration board can be placed within the range covered by the field of view FOV of two image capture devices, allowing the image capture devices to collect parameter information corresponding to the calibration board, and then, based on a calibration algorithm, scene calibration information can be obtained. Specifically, please continue to refer to FIG. 7, where calibration board 311 is placed within the range covered by the field of view FOV of the image capture device 301 and image capture device 302; the calibration board 312 is placed within the range covered by the field of view FOV of the image capture device 302 and the image capture device 303; the calibration board 313 is placed within the range covered by the field of view FOV of the image capture device 303 and the image capture device 304; the calibration board 314 is placed within the range covered by the field of view FOV of the image capture device 304 and the image capture device 305; the calibration board 315 is placed within the range covered by the field of view FOV of the image capture device 305 and the image capture device 306.

Based on the example shown in FIG.7, each calibration board in this example corresponds to two image capture devices, meaning each image capture device can obtain parameter information corresponding to its calibration board. Specifically, the image capture device 301 can obtain the parameter information for the calibration board 311; the image capture device 302 can obtain the parameter information for the calibration board 311 and the calibration board 312; the image capture device 303 can obtain the parameter information for the calibration board 312 and the calibration board 313; the image capture device 304 can obtain the parameter information for the calibration board 313 and the calibration board 314; the image capture device 305 can obtain the parameter information for the calibration board 314 and the calibration board 315; the image capture device 306 can obtain the parameter information for the calibration board 314 and the calibration board 315.

Optionally, after obtaining the multiple parameter informations, the electronic device can confirm the scene calibration information based on the multiple parameter informations. The scene calibration information can include the extrinsic parameters of each image capture device relative to one of the image capture devices, as shown in the example of FIG. 7, which can be the extrinsic parameters of the image capture devices 302 to 306 relative to image capture device 301. These extrinsic parameters can be matrices that can be configured to transform the positions of the image capture devices or the images obtained by them. At this point, the image capture device can be used as the origin of the world coordinate system; for example, the position of image capture device 301 can be taken as the origin of the world coordinate system, and the coordinate information of the remaining image capture devices in this world coordinate system can be determined based on the extrinsic parameters.

Specifically, the electronic device can use the obtained parameter informations and, based on a calibration algorithm, confirm the scene calibration information. As shown in the example of FIG. 7, the extrinsic parameters of image capture device 302 relative to image capture device 301 can be determined based on the parameter information obtained by image capture device 301 for calibration board 311, and the parameter information obtained by image capture device 302 for calibration board 311. That is, the position or the obtained image of image capture device 302 can be transformed through these extrinsic parameters.

Similarly, the extrinsic parameters of the image capture device 303 relative to the image capture device 302, the image capture device 304 relative to the image capture device 303, the image capture device 305 relative to the image capture device 304, and the image capture device 306 relative to the image capture device 305 can be confirmed based on the parameter informations obtained by the aforementioned image capture devices for the calibration boards. Optionally, the extrinsic parameters of the image capture device 303 relative to the image capture device 301 can be confirmed based on the extrinsic parameters of the image capture device 302 relative to the image capture device 301, and the extrinsic parameters of the image capture device 303 relative to the image capture device 302. Similarly, the extrinsic parameters of the image capture devices 304, 305, and 306 relative to the image capture device 301 can be confirmed respectively. Thus, each image capture device other than the image capture device 301 has established corresponding extrinsic parameters with the image capture device 301, that is, the scene calibration information has been obtained. For example, the aforementioned calibration algorithm can be the Zhang Zhengyou calibration method.

It should be noted that the method of using parameter informations and confirming scene calibration information based on a calibration algorithm in this embodiment is only an exemplary illustration and is not limiting; in practice, it can be flexibly set according to needs.

Step S214: confirming the point cloud information of the target object in the target space based on the image information and the scene calibration information.

For some implementations, as mentioned earlier, the image capture device can be a camera with depth information, so the image information corresponding to the target space obtained from the multiple image capture devices can generate point cloud data of the target object in the target space. Since the position of each image capture device is different, the point cloud data corresponding to the target space obtained by each image capture device is also different. At this time, based on the scene calibration information obtained in the previous steps, the point cloud data obtained by each image capture device can be processed and uniformly converted into the point cloud data corresponding to one of the image capture devices.

For example, each image capture device can provide a frame of point cloud data, which can then be transformed based on scene calibration information and configured to obtain the point cloud data corresponding to the target scene. This fusion can involve taking the average value of each set of point cloud data that represents the same entity, generating new point cloud data. By analyzing this point cloud data, the point cloud information corresponding to the target object in the target space can be confirmed. Compared to the point cloud information obtained by a single image capture device, the accuracy of this point cloud information is improved.

The point cloud information is composed of many points and can include three-dimensional coordinate information in the world coordinate system as well as color, classification values, intensity values, time, and other information. The point cloud information is configured to describe the information of the target object in the target space, and point cloud data is generated based on the image information obtained by the image capture device.

Optionally, after obtaining the image information of the target space, the image capture device can first perform preprocessing on the image information to remove invalid interference data included in the image information.

For example, the electronic device can perform hole filling operations on the image information, specifically, repairing closed holes by expanding the boundary based on neighborhood information, including: extracting the edge of the hole, calculating the size of the hole area; extracting neighborhood pixels within a certain range around the hole's peripheral pixels, and averaging all the peripheral pixels with weights; if the hole area exceeds a threshold, fill the black pixel size with the average value of the surrounding pixels.

Another example is that the electronic device can perform filtering operations on the image information, specifically, using median filtering to mainly remove some salt-and-pepper noise, which will hardly affect the original image information.

After obtaining point cloud data corresponding to the target scene, the electronic device can use deep learning methods and pose estimation algorithms to obtain coordinate informations corresponding to specific parts of the target object.

Please refer to FIG.8, which illustrates a schematic diagram of specific parts of a target object. The specific parts of the target object can include the head, center of the shoulders, right hand, right wrist, right elbow, right shoulder, spine, center of the hips, right hip, right knee, right ankle, right foot, left hand, left wrist, left elbow, left shoulder, left hip, left knee, left ankle, and left foot. The point cloud information of the target object can include coordinate information corresponding to each specific part. As mentioned above, different image capture devices may obtain different position information in the point cloud data after calibration based on scene information. For example, the image capture device A obtains the position information A1 for the head of the target object, while the image capture device B obtains the position information B1 for the head of the target object. In this case, the average of A1 and B1 can be taken as the position information in the point cloud data for the head of the target object. The point cloud data obtained by each image capture device can be uploaded to a server for point cloud data processing or processed locally.

Step S220: determining a current position of the target object based on the point cloud information.

For some implementations, after obtaining the point cloud information of the target object in the target space as described above, the electronic device can determine the current position of the target object based on this point cloud information. Specifically, the electronic device can preset the coordinate information corresponding to a specific part of the target object as the current position of the target object, for example, using the coordinate information of the head part shown in FIG. 8 as the current position of the target . At this time, the coordinate information corresponding to the head part included in the point cloud information can be used as the current position of the target.

It should be noted that using the head part as the current position of the target object is only an illustration and does not constitute a limitation of the method for determining the current position of the target object based on point cloud information.

Step S230: when there are multiple devices corresponding to the control instruction in the target space, determining a target device that meets a control condition from multiple devices, based on the current position of the target object and the positions of the multiple devices.

Step S240: controlling the target device to execute the control instruction.

As described in the aforementioned embodiments, steps S230 and S240 have already been elaborated upon and will not be repeated here.

The device control method, apparatus, electronic device, and readable storage medium provided by this disclosure retrieve the point cloud information of the target object in the target space based on the multiple image capture devices, determine the current position of the target object based on the point cloud information, identify the target device that meets the control condition from the multiple devices based on the current position of the target object and the positions of the multiple devices, and then control the target device to execute the control instruction. By obtaining the scene calibration information between the multiple image capture devices and transforming the image information captured by each image capture device, the accuracy of the point cloud information of the target object obtained from the multiple image informations is enhanced.

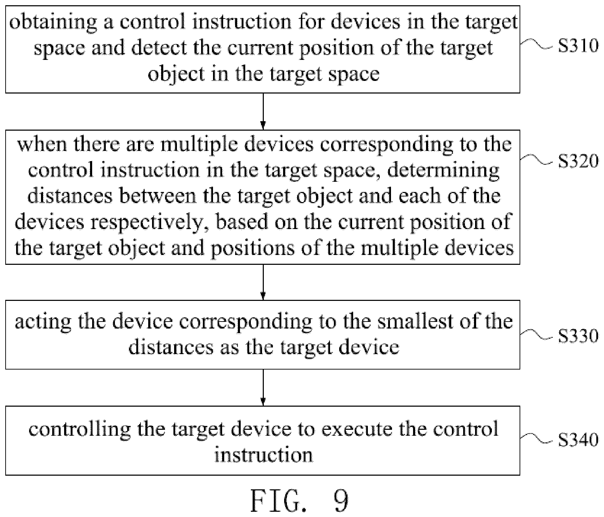

Please refer to FIG. 9, which illustrates a device control method provided in an embodiment of this disclosure. This method can be applied to the device control scenario 100 or device control scenario 200 described in the previous embodiments. Specifically, the method includes steps S310 to S340.

Step S310: obtaining a control instruction for devices in the target space and detect the current position of the target object in the target space.

Step S310 has been described in the aforementioned embodiments and will not be repeated here.

Step S320: when there are multiple devices corresponding to the control instruction in the target space, determining distances between the target object and each of the devices respectively, based on the current position of the target object and positions of the multiple devices.

Step S330: acting the device corresponding to the smallest of the distances as the target device.

As known from the aforementioned embodiments, the control instruction can correspond to multiple devices in the target space; therefore, it is necessary to identify the target device from the multiple devices to execute the control instruction.

In some implementations, the electronic device can perform manual calibration in advance on the image information captured by the image capture device. For example, the image capture device displays the captured image information on the terminal, and users can select devices in the displayed image information on the terminal, thereby calibrating the devices in the image information. Each device in the image information can be calibrated using a bounding box (Bounding Box) , and the coordinate information corresponding to the center point of the bounding box can be used as the position of the device, with the coordinate information being in the world coordinate system. The coordinate information of the center point of the bounding box can be obtained based on the point cloud data generated from the image information.

Optionally, the current position of the target object can correspond to coordinate information in the world coordinate system; therefore, the electronic device can determine the distances between the target object and each device based on the current position of the target object and the positions of the devices, which can be Euclidean distances. Specifically, the distances between the target object and each device can be obtained based on the distance formula between two coordinates.

Optionally, when there are the multiple devices in the target space corresponding to the control instruction, determining the distances between the target object and each of the devices based on the current position of the target object and the positions of the multiple devices can include: determining a current position of a specified part of the target object, when there are the multiple devices corresponding to the control instruction in the target space; and based on the current position of the specified part and the positions of the multiple devices, determining the distances between the target object and each of the multiple devices.

For example, please continue to refer to FIG. 8, where the head of the target object can be taken as the specified part, and the coordinate information of the head can be used as the current position of the target object. The electronic device then determines the distances between the target object and each of the multiple device based on this current position of the target object. The specific method has been introduced above and will not be repeated here.

Optionally, since control instruction for devices in the target space are likely intended to control the nearest device among those capable of executing the control instruction near the target object, the control condition can be set as the device closest to the target object. At this time, the device corresponding to the smallest distance obtained from the distances between the target object and each device can be designated as the target device, and then the target device is controlled to execute the control instruction, i.e., the target device meets this control condition at this time.

Step S340: controlling the target device to execute the control instruction.

Step S340 has been described in the aforementioned embodiments and will not be repeated here.

The device control method, apparatus, electronic device, and readable storage medium provided by this disclosure, which designate the device corresponding to the smallest distance among the distances between the target object and each device as the target device and then control the target device to execute the control instruction, can avoid interference caused by multiple devices responding simultaneously and also achieve tracking of the control instruction to the target object, enhancing the user experience.

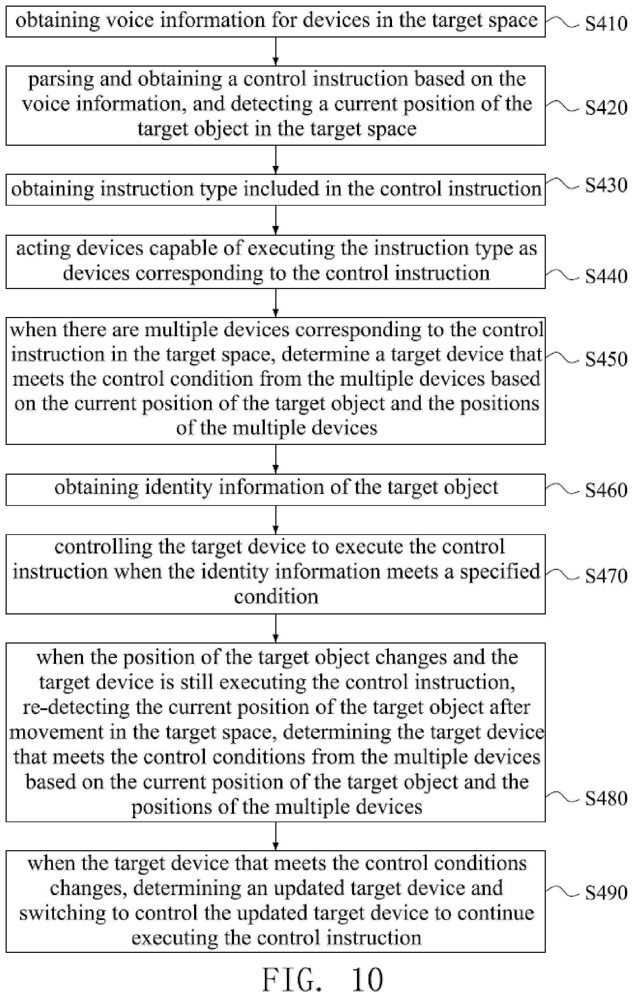

Please refer to FIG.10, which illustrates a device control method provided in an embodiment of this disclosure. This method can be applied to the device control scenario 100 or device control scenario 200 described in the previous embodiments and can be applied to the terminal 101 shown in FIG. 1. Specifically, the method includes steps S410 to S490.

Step S410: obtaining voice information for devices in the target space.

Step S420: parsing and obtaining a control instruction based on the voice information, and detecting a current position of the target object in the target space.

For some implementations, the control instruction for the devices in the target space can include voice information. The electronic device can obtain the voice information and parse it to derive the control instruction corresponding to the voice information. For example, the electronic device can directly capture voice information emitted by the user. Alternatively, the electronic device can also obtain voice information captured by other devices with voice capture capabilities.

In one example, the electronic device can receive control instruction spoken by the target object. For instance, if the device to be controlled is a television, and the target object says "turn on the TV," once the electronic device receives the voice information "turn on the TV," it is considered that the target object has successfully issued the control instruction. The electronic device can be a standalone device equipped with a microphone and control functions. In other implementations, various terminals or devices to be controlled can also have voice capture capabilities, such as smartphones, tablets, laptops, smart control panels, etc., and devices like televisions or lamps that can directly capture voice information emitted by the target object.

In another example, the electronic device may not have voice capture capabilities but can communicate with devices that do, to obtain voice information captured by those devices. Optionally, since the capability of a single device with voice capture is limited, multiple devices with voice capture capabilities can be set up to cover the entire target space, ensuring that voice information emitted by the target object in the target space can be effectively captured by devices with voice capture capabilities.

Optionally, after obtaining the voice information, the electronic device can parse it to extract the control instruction corresponding to the voice information. In one example, after obtaining the voice information, the electronic device can upload the voice information to a server, which uses speech recognition technology to extract the control instruction from the voice information and then returns the control instruction to the electronic device. In another example, the electronic device can process the voice information locally using speech recognition technology to obtain the control instruction corresponding to the voice information.

Optionally, after obtaining the control instruction, the electronic device can detect the current position of the target object in the target space. This has been described in detail in the aforementioned embodiments and will not be repeated here.

Step S430: obtaining instruction type included in the control instruction.

Step S440: acting devices capable of executing the instruction type as devices corresponding to the control instruction.

Step S450: when there are multiple devices corresponding to the control instruction in the target space, determine a target device that meets the control condition from the multiple devices based on the current position of the target object and the positions of the multiple devices.

For some implementations, since there are a lot of devices in the target space, not every device can execute the control instruction. Therefore, it is necessary to first identify the devices in the target space that can execute the control instruction. Specifically, the electronic device can obtain the instruction type included in the control instruction and then identify the devices in the target space that can execute that instruction type.

For example, the instruction type may include device functionality. If the device functionality is lighting, then the lights in the target space can be considered electronic devices capable of executing the instruction type and are designated as the devices corresponding to the control instruction. If the device functionality is display, then devices in the target space with display functionality, such as televisions, laptops, and tablet computers, can be considered devices capable of executing the instruction type and are designated as the devices corresponding to the control instruction.

In another exemplary case, the instruction type can also include the name of the device. For instance, if the device name is light, the lights within the target space can be considered electronic devices capable of executing the instruction type and are designated as the devices corresponding to the control instruction. When the device name is air conditioner, the air conditioners within the target space can be considered devices capable of executing the instruction type and are designated as the devices corresponding to the control instruction.

For some implementations, there may be multiple devices in the target space that correspond to the control instruction. For example, as mentioned above, lights in the target space are considered electronic devices corresponding to the control instruction, but there are multiple lights in the target space. In this case, the target device that meets the control condition can be determined from among the multiple devices corresponding to the control instruction.

In one exemplary approach, the electronic device can set the control condition as the device closest to the target object. At this time, the device corresponding to the smallest distance obtained from the distances between the target object and each device can be designated as the target device, and then the target device is controlled to execute the control instruction, meaning that the target device meets this control condition at this time.

Step S460: obtaining identity information of the target object.

Step S470: controlling the target device to execute the control instruction when the identity information meets a specified condition.

For some implementations, allowing any target object to issue control instruction and control the target device to execute the control instruction may pose security risks. Therefore, before controlling the target device to execute the control instruction, the electronic device can also obtain the identity information of the target object and only continue to control the target device to execute the control instruction when the identity information meets the specified condition.

Optionally, the specified condition can be pre-recorded standard identity information. Meeting the specified condition means meeting this pre-recorded standard identity information. For example, the identity information of the target object can be fingerprint information, in which case the specified condition is the pre-recorded standard fingerprint information. The identity information of the target object can also be facial information, in which case the specified condition is the pre-recorded standard facial information. It should be noted that the aforementioned identity information is provided as an example only and does not limit the present disclosure.

Optionally, the pre-recorded standard identity information may correspond to multiple identities. In this case, when the obtained identity information of the target object matches any one of the multiple standard identity informations, it can be considered that the identity information meets the specified condition. Specifically, the identity information of the target object is considered to satisfy the standard identity information if the match degree between the identity information of the target object and the standard identity information exceeds a specified threshold, for example, 90%.

Step S480: when the position of the target object changes and the target device is still executing the control instruction, re-detecting the current position of the target object after movement in the target space, determining the target device that meets the control conditions from the multiple devices based on the current position of the target object and the positions of the multiple devices.

Step S490: when the target device that meets the control conditions changes, determining an updated target device and switching to control the updated target device to continue executing the control instruction.

For some implementations, during the execution of the control instruction by the target device in the target space, the target object may move within the target space. At this time, the determination of the target device that meets the control conditions based on the current position of the target object and the positions of the devices may change. Therefore, while controlling the target device to execute the control instruction, the electronic device can also continuously obtain the position information of the target object. When the position information of the target object changes and the target device is still executing the control instruction, it can re-detect the current position of the moved target object in the target space. Based on the current position of the target object and the positions of the multiple devices, determine the target device that meets the control conditions from among the multiple devices. The method of re-detecting the current position of the target object, based on the current position and the positions of the devices, to determine the target device that meets the control conditions from among the multiple devices has been described in detail in the aforementioned embodiments and will not be repeated here.

Optionally, when it is determined that a new target device has changed, i.e., it is not the same as the previous target device, the control can be switched to the updated target device to continue executing the control instruction. For example, when the target space includes a light A, a light B, and a light C, and the target object is near the light A when the control instruction "turn on the light" is issued, at this time, based on the position information of the target object and the position information of the light A, the light B, and the light C, it is determined that the light A is the closest to the target object, so the light A can be designated as the target device, thereby controlling the light A to turn on. If the target object then moves towards the light B, the change in the position of the target object can be detected, and thus the current position of the moved target object in the target space can be re-detected. Based on the current position of the target object and the positions of the devices, determine the target device that meets the control condition from among the multiple devices. When the target object is near the light B, the target device that meets the control condition becomes the light B, so the light B is determined as the updated target device, and the control is switched to the updated target device to continue executing the control instruction, i.e., controlling the light B to turn on.

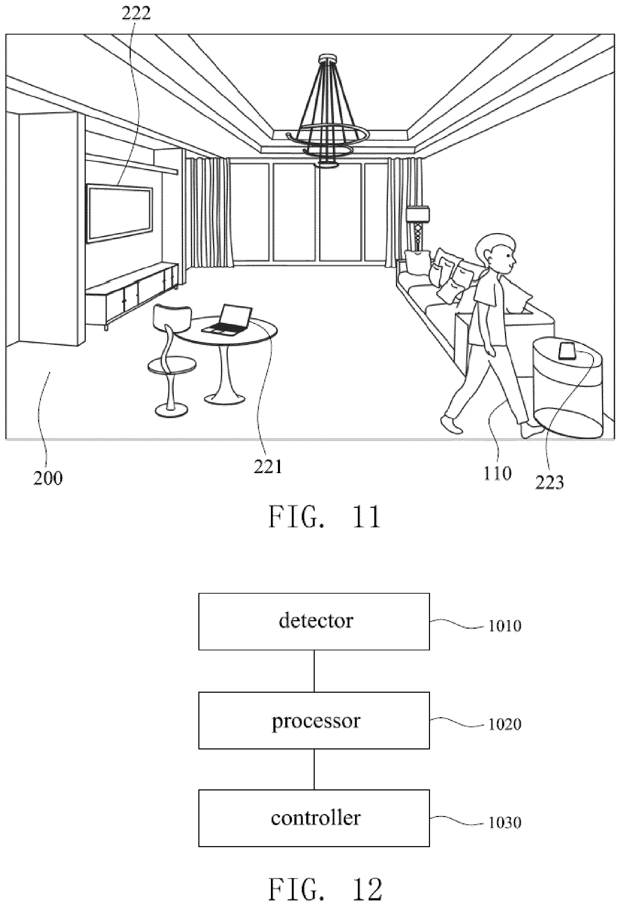

Specifically, for an embodiment provided by this disclosure, please continue to refer to FIG. 3. When the control instruction corresponds to audio-visual devices capable of voice and/or video calls, and it is determined that audio-visual device 221, the audio-visual device 222, and the audio-visual device 223 in the target space all meet the control conditions, and then the target device is determined to be the audio-visual device 221, which is closest to the target object 110, then the target object 110 can conduct a video call through the audio-visual device 221. At this time, please refer to FIG. 11. When the position of the target object 110 changes and the audio-visual device 221 is still in a video call, the target device can be re-determined to change to the audio-visual device 223 based on the aforementioned method. At this time, device 223 can be controlled to execute the control instruction, i.e., the target object 110 can conduct a video call through the audio-visual device 223.

Through the device control method provided by the embodiment of this disclosure, the control instruction is executed on the target device only when the identity information of the target object meets the specified condition. This can prevent accidental triggering of the control instruction by multiple target objects and enhances the security of controlling devices by determining whether the identity information meets the specified condition. The method also allows the device corresponding to the control instruction to follow the target object as it moves within the target space, improving the user experience for the target object.

FIG.s 4-6, 9-10 are flow schematic diagrams of a method according to an embodiment of the present invention. It should be understood that although the steps in the flow charts of FIG.s 4-6, 9-10 are sequentially displayed according to the direction of the arrows, these steps are not necessarily executed in the order indicated by the arrows. Unless explicitly stated in this document, there are no strict order restrictions on the execution of these steps, and they can be executed in other orders. Moreover, at least some of the steps in FIG.s 4-6, 9-10 can include multiple sub-steps or stages. These sub-steps or stages are not necessarily executed at the same time but can be executed at different times. Their execution order is not necessarily sequential but can be executed in rotation or alternation with at least some of the other steps or sub-steps or stages of other steps.

Please refer to FIG. 12, which illustrates a structural block diagram of a device control apparatus 1000 provided in an embodiment of this disclosure. The apparatus 1000 includes: a detector 1010, a processor 1020, and a controller 1030.

The detector 1010 is configured to obtain a control instruction for devices in a target space and detect a current position of a target object in the target space.

Optionally, the detector 1010 is also configured to obtain point cloud information of the target object in the target space; and determine the current position of the target object based on the point cloud information.

Optionally, the detector 1010 is also configured to capture image information in the target space; and confirm the point cloud information of the target object in the target space based on the image information and scene calibration information.

Optionally, the detector 1010 is also configured to obtain parameter information collected by multiple image capture devices in the target space; and confirm scene calibration information based on multiple parameter informations.

Optionally, the detector 1010 is also configured to obtain voice information for devices in the target space; parse the control instruction from the voice information, and detect current position of the target object in the target space.

The processor 1020 is configured to determine the target device that meets the control condition from among multiple devices when there are the multiple devices corresponding to the control instruction in the target space, based on the current position of the target object and the positions of the multiple devices.

Optionally, the processor 1020 is also configured to determine distances between the target object and each of the multiple devices when there are the multiple devices corresponding to the control instruction in the target space; and designate the device corresponding to the smallest distance as the target device.

Optionally, the processor 1020 is also configured to determine the current position of a specified part of the target object when there are multiple devices in the target space that correspond to the control instruction; and based on the current position of the specified part and the positions of the devices, determine the distances between the target object and each device.

Optionally, the processor 1020 is also configured to obtain the instruction type included in the control instruction; designate devices capable of executing the instruction type as the devices corresponding to the control instruction; and when there are the multiple devices in the target space that correspond to the control instruction, determine the target device that meets the control condition from among the multiple devices based on the current position of the target object and the positions of the multiple devices.

The controller 1030 is configured to control the target device to execute the control instruction.

Optionally, the processor 1030 is also configured to obtain the identity information of the target object; and control the target device to execute the control instruction when the identity information meets a specified condition.

Optionally, the device control apparatus 1000 is also configured to re-detect the current position of the moved target object in the target space when the position of the target object changes and the target device is still executing the control instruction, based on the current position of the target object and the positions of the multiple devices, determine the target device that meets the control condition from among the multiple devices; and when the target device that meets the control condition changes, determine the updated target device and switch to control the updated target device to continue executing the control instruction.

Those skilled in the art will clearly understand that, for the convenience and simplicity of description, the specific working processes of the described devices and modules can refer to the corresponding processes in the aforementioned method embodiments, and will not be repeated here.

In the several embodiments provided by this disclosure, the coupling between modules can be electrical, mechanical, or other forms of coupling.

Additionally, in the various embodiments of this disclosure, the various functional modules can be integrated into one processing module, can physically exist separately, or two or more modules can be integrated into one module. The integrated modules mentioned above can be implemented in the form of hardware or in the form of software functional modules.

The various modules in the device control apparatus mentioned above can be fully or partially implemented through software, hardware, and their combinations. For example, the network interface can be an Ethernet card or a wireless network card. The aforementioned modules can be embedded in or independent of a processor within a server in the form of hardware, or stored in the form of software in a storage device within the server for the processor to call and execute the corresponding operations of the various modules.

As used in this application, the terms "component," "module," and "system" are intended to represent computer-related entities, which can be hardware, a combination of hardware and software, software, or running software. For example, a component can be but is not limited to, a process running on a processor, a processor, an object, executable code, an executing thread, a program, and/or a computer. By way of illustration, an application running on a server and the server itself can be components. One or more components can reside within a process and/or an executing thread, and components can be located within one computer and/or distributed across two or more computers.

In some embodiments, a device control system is also provided, which includes electronic devices, smart devices, and further can include an image capture device. The image capture device is deployed in the target space and can be configured to capture spatial images corresponding to the target space. Optionally, the image capture device can determine the current position of the target object based on the spatial images. Optionally, the electronic device can also obtain the spatial images captured by the image capture device and determine the current position of the target object based on those spatial images.

The electronic device is configured to obtain control instruction for devices in the target space, detect a current position of a target object in the target space, and when there are multiple smart devices corresponding to the control instruction in the target space, determine the smart device that meets the control conditions from among the multiple smart devices based on the current position of the target object and the positions of the smart devices, and send the control instruction to the smart device that meets the control condition.

The smart device is configured to receive the control instruction sent by the electronic device and execute the control instruction. By determining the target device that meets the control condition from among multiple devices based on the current position of the target object and the positions of the multiple devices, more intelligent device control is achieved, which enhances the user's experience.

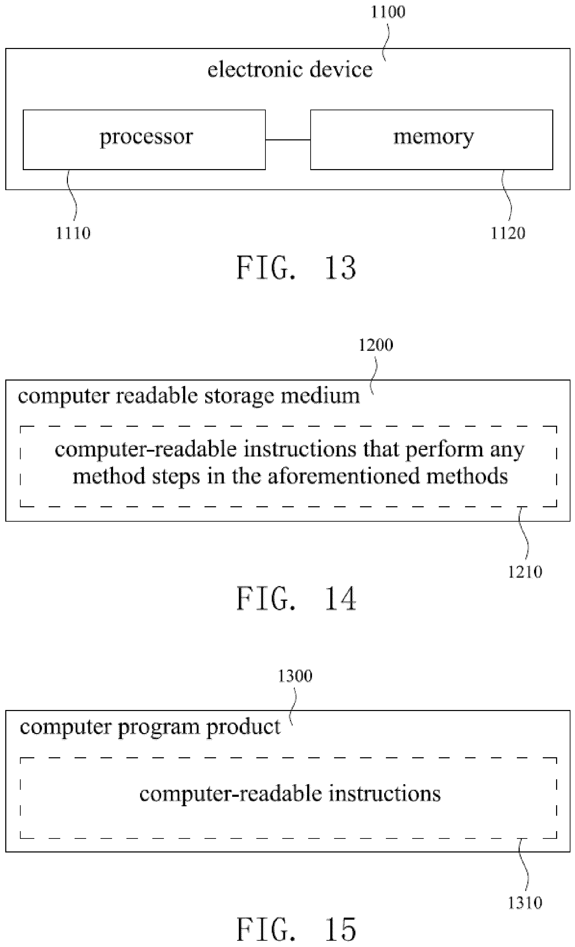

Please refer to FIG. 13, which illustrates a structural block diagram of an electronic device 1100 provided in an embodiment of this disclosure. The electronic device 1100 can be a smartphone, tablet computer, or other electronic devices capable of running computer programs. The electronic device 1100 in this disclosure can include one or more of the following components: a processor 1110, a memory 1120, wherein the one or more processors execute computer-readable instructions to implement the aforementioned methods.

The processor 1110 may include one or more processing cores. The processor 1110 connects various parts of the entire electronic device 1100 through various interfaces and lines, and executes various functions and processes data of the electronic device 1100 by running or executing instructions, programs, code libraries, or instruction sets stored in the memory 1120, as well as calling data stored in the memory 1120. Optionally, the processor 1110 can be implemented in at least one hardware form of Digital Signal Processing (DSP), Field-Programmable Gate Array (FPGA), or Programmable Logic Array (PLA). The processor 1110 can integrate a combination of one or several of a Central Processing Unit (CPU), a Graphics Processing Unit (GPU), and a modem. The CPU mainly handles the operating system, user interface, and computer programs, the GPU is responsible for rendering and drawing display content; the modem handles wireless communication. It is understood that the aforementioned modem can also be implemented separately through a communication chip rather than being integrated into the processor 1110.

The memory 1120 can include Double Data Rate Synchronous Dynamic Random-Access Memory (DDR) and Static Random-Access Memory (SRAM), and optionally, the memory 1120 can also include secondary storage, which can be a mechanical hard disk, solid-state disk, USB drive, flash card, etc. The memory 1120 is used to store computer-readable instructions, programs, codes, code libraries, or instruction sets. The memory 1120 can include a storage program area and a storage data area, where the storage program area can store computer-readable instructions for implementing an operating system, computer-readable instructions for implementing at least one function, and computer-readable instructions for implementing the following method embodiments. The storage data area can also store data created by the electronic device 1100 during use.

Please refer to FIG. 14, which illustrates a structural block diagram of a computer readable storage medium 1200 provided in an embodiment of this disclosure. The computer-readable medium 1200 stores computer-readable instructions that can be called and executed by a processor to perform the methods described in the aforementioned method embodiments.

The computer readable storage medium 1200 can be an electronic memory such as flash memory, EEPROM (Electrically Erasable Programmable Read-Only Memory), EPROM, hard disk, or ROM. Optionally, the computer readable storage medium 1200 includes a non-transitory computer readable storage medium. The computer readable storage medium 1200 has storage space for computer-readable instructions that perform any method steps in the aforementioned methods 1210. These computer-readable instructions can be read from or written to one or more computer program products. The computer-readable instructions 1210 can be compressed in an appropriate form.

Please refer to FIG. 15, which illustrates a structural block diagram of a computer program product 1300 provided in an embodiment of this disclosure. The computer program product 1300 includes computer-readable instructions 1310, which when executed by a processor, implement the steps of the aforementioned methods.

Finally, it should be noted that the above embodiments are provided to illustrate the technical solutions of this disclosure, rather than to limit it; although this disclosure has been described in detail with reference to the aforementioned embodiments, those skilled in the art should understand that they can still modify the technical solutions recorded in the aforementioned embodiments or replace some technical features with equivalent substitutions; and these modifications or replacements do not cause the corresponding technical solutions to deviate from the spirit and scope of the technical solutions of the embodiments of this disclosure.

## Claims

1. A device control method, executed by an electronic device, wherein the method comprises:
obtaining a control instruction for devices in a target space, detecting a current position of a target object in the target space;
when there are multiple devices corresponding to the control instruction in the target space, determining a target device that meets a control condition from the multiple devices, based on the current position of the target object and positions of the multiple devices; and
controlling the target device to execute the control instruction.

2. The method according to claim 1, wherein detecting the current position of the target object in the target space comprises:
obtaining point cloud information of the target object in the target space; and
determining the current position of the target object based on the point cloud information.

3. The method according to claim 2, wherein obtaining the point cloud information of the target object in the target space comprises:
capturing image information in the target space; and
confirming the point cloud information of the target object in the target space based on the image information and scene calibration information.

4. The method according to claim 3, before confirming the point cloud information of the target object in the target space based on the image information and the scene calibration information, further comprises:
obtaining parameter informations captured by multiple image capture devices in the target space; and
confirming the scene calibration information based on the parameter informations.

5. The method according to claim 1, wherein when there are the multiple devices corresponding to the control instruction in the target space, determining the target device that meets the control condition from the multiple devices, based on the current position of the target object and positions of the multiple devices, comprises:
when there are the multiple devices corresponding to the control instruction in the target space, determining distance between the target object and each of the multiple devices respectively, based on the current position of the target object and positions of the multiple devices; and
acting the device corresponding to the smallest of the distances as the target device.

6. The method according to claim 5, wherein when there are the multiple devices corresponding to the control instruction in the target space, determining the distance between the target object and each of the multiple devices respectively, based on the current position of the target object and positions of the multiple devices, comprises:
determining a current position of a specified part of the target object when there are the multiple devices corresponding to the control instruction in the target space; and
determining the distances between the target object and each of the multiple devices, based on the current position of the specified part and the positions of the multiple devices.

7. The method according to claim 1, wherein when there are the multiple devices corresponding to the control instruction in the target space, determining the target device that meets the control condition from the multiple devices, based on the current position of the target object and the positions of the multiple devices comprises:
obtaining instruction type comprised in the control instruction;
acting devices capable of executing the instruction type as devices corresponding to the control instruction; and
when there are the multiple devices corresponding to the control instruction in the target space, determining the target device that meets the control condition from the multiple devices based on the current position of the target object and the positions of the multiple devices.

8. The method according to claim 1, wherein controlling the target device to execute the control instruction comprises:
obtaining identity information of the target object; and
controlling the target device to execute the control instruction when the identity information meets a specified condition.

9. The method according to claim 1, wherein obtaining the control instruction for the devices in the target space and detecting the current position of the target object in the target space comprises:
obtaining voice information for the devices in the target space; and
parsing and obtaining the control instruction based on the voice information, and detecting the current position of the target object in the target space.

10. The method according to claim 1, further comprising:
when the position of the target object changes and the target device is still executing the control instruction, re-detecting the current position of the target object after movement in the target space, determining the target device that meets the control condition from the multiple devices based on the current position of the target object and the positions of the multiple devices; and
when the target device that meets the control condition changes, determining an updated target device and switching to control the updated target device to continue executing the control instruction.

11. A device control apparatus, deployed on an electronic device, the apparatus comprising:
a detector, configured to obtain a control instruction for devices in a target space and detect a current position of a target object in the target space;
a processor, configured to determine a target device that meets a control condition from multiple devices when there are the multiple devices corresponding to the control instruction in the target space, based on the current position of the target object and positions of the multiple devices;
and a controller, configured to control the target device to execute the control instruction.

12. The apparatus according to claim 11, wherein the detector is further configured to determine distance between the target object and each of the devices when there are the multiple devices corresponding to the control instruction in the target space, based on the current position of the target object and the positions of the multiple devices, and acting the device corresponding to the smallest of distances as the target device.

13. A device control system, the system comprising:
an electronic device, configured to obtain control instruction for devices in a target space, detect a current position of a target object in the target space, and determine devices that meet control condition from multiple devices when there are the multiple devices corresponding to the control instruction in the target space, based on the current position of the target object and the positions of the multiple devices; a smart device, configured to control the devices that meet the control condition to execute the control instruction;
a smart device, configured to receive the control instruction sent by the electronic device and execute the control instruction.

14. An electronic device, comprising a memory and a processor, the memory storing computer-readable instructions, wherein the processor performs steps of the method as described in any one of claims 1-10 when executing the computer-readable instructions.

15. A computer readable storage medium, the medium storing computer-readable instructions, the computer-readable instructions being executable by a processor to perform steps of the method as described in any one of claims 1-10.
